# EUROPEAN PATENT APPLICATION

(11) **EP 3 968 189 A1**
(43) Date of publication of application: **16.03.2022**
(21) Application number: 21196946.4
(22) Date of filing: 15.09.2021
(51) Int. Cl.: G06F 21/30, G06F 21/88, H04L 9/32, H04L 67/10, H04L 9/40

(54) **SYSTEM FOR AUTHENTICATING PHYSICAL OBJECTS USING DIGITAL FINGERPRINTS**

(30) Priority: 15.09.2020 US 202017021954
(71) Applicant: Alitheon, Inc., Bellevue, WA 98004 (US)
(72) Inventor: Keech, Evan Murphy, Bellevue, 98004 (US); Crowley, Brian, Bellevue, 98004 (US); Courtney, Sean, Bellevue, 98004 (US); Shannon, Will Charles, Bellevue, 98004 (US); Wainwright, Shannon, Bellevue, 98004 (US); Meeks, Jonathan, Bellevue, 98004 (US); Tocci, Mark, Bellevue, 98004 (US); Qasim, Kanzah, Bellevue, 98004 (US); Moorhead, William, Bellevue, 98004 (US)
(74) Representative: Herre, Peter

(57) **Abstract**

Disclosed embodiments include systems for authenticating physical objects using digital fingerprints. The system may be hosted on a digital computing server and may include a storage layer for storing a plurality of digital fingerprints. To authenticate objects, multiple users may securely access an authentication layer of the system through a users layer. The digital fingerprints corresponding to a particular class of objects may then be loaded into working memory and used to authenticate objects in the particular class. The storage layer may store digital fingerprints extracted from many different classes of objects so that many different types of objects may be authenticated using the system.

## Description

### FIELD OF THE INVENTION

This application pertains to methods, systems and software for secure registration, induction and authentication of physical objects through the use of digital fingerprints for manufacturing and supply chain environments.

### BACKGROUND OF THE INVENTION

There are many reasons why a manufacturer or a distributer would want to carefully monitor an item within their manufacturing process or across a supply chain. Two primary ones are to track the item and to ensure that the item that arrives at the next step or at the end user is not counterfeit or otherwise illegitimate. Historically, these two essentially independent needs have been treated as though they were a single requirement, with tracking taking precedence over preventing counterfeits from entering the supply chain. An example of such confusion was when a manufacturer or distributer believed that the presence of a legitimate serial number, in the form of a barcode for example, equated to the presence of a legitimate item. Serial numbers, particularly if they are applied to the object rather than being a part of the object, can be counterfeited themselves, often far more easily than the item itself. Tracking, when there is no danger of counterfeiting or of accidentally installing the wrong part during manufacturing, does not require identification provided a proxy such as a serial number can be attached.

If, however, there is a risk of counterfeiting or a risk that a person on an assembly line, say, will use the wrong part, then being able to determine the identity of the part becomes essential. The need remains for improvements to mitigate these two separate problems - tracking an object that may or may not have an attached serial number and ensuring that the item received at a manufacturing site or at a station within a facility is the correct item.

### SUMMARY OF THE DISCLOSURE

The invention is defined by the independent claims. The dependent claims concern optional features of some embodiments of the invention. The following is a summary of the present disclosure to provide a basic understanding of some features and context. This summary is not intended to identify key or critical elements of the disclosure or to delineate the scope of the disclosure. Its sole purpose is to present some concepts of the present disclosure in simplified form as a prelude to a more detailed description that is presented later.

The technology disclosed herein addresses the two separate problems identified above - tracking an object that may or may not have an attached serial number and ensuring that the item received at a manufacturing site or at a station within a facility, is the correct item. It does so with a single technology based on digital fingerprints of the items in the manufacturing or supply chain.

In one embodiment, a system enables item registration and authentication of physical objects in varied environments and the storage of and access to the digital fingerprints occurring in the cloud. Its applicability to a particular environment is primarily achieved by changing the business rules, reference sets, and authentication parameters of the disclosed system. A "reference set" refers to a set of trusted digital fingerprints. For example, they may be digital fingerprints acquired (or extracted from image data acquired) under trusted circumstances for later reference and comparison.

The disclosed system is designed to do several things as the central part of an integrated system. First, to authenticate items in a supply or distribution chain as well as internally in a production facility. Second, it is designed to use digital fingerprinting in a native way as part of the core process, taking full advantage of the security provided by a digital fingerprinting process. Third, the registration/authentication systems are table-driven making it easy to change applications while using the same disclosed system.

In an embodiment, an example system may comprise a central digital computing server coupled to a machine-readable non-volatile memory. Preferably, the server may be provisioned in an on-demand cloud computing platform. The server is arranged to implement the following components, although the names given to the components are not critical:
a storage layer to store digital fingerprint records and process event records, each event record linked to the stored digital fingerprints used in the corresponding event;
an authentication layer including working memory for temporary data storage; the memory storing digital fingerprint records, each digital fingerprint record associated to a physical object registered in the system;
a users layer to maintain user accounts, where each user and third-party system granted access to the system has a corresponding user account in the users layer;
a services registrar component to manage working memory allocations, including allocating a portion of the working memory as an authentication instance for one client for a selected product class; wherein the services registrar loads digital fingerprint records of the selected product class from the storage layer into the authentication instance for use in matching a digital fingerprint; and
a security layer to enforce rules governing network level access to the system, where the access rules are stored in the users layer, on a per user basis, and or stored in the services registrar component.

### BRIEF DESCRIPTION OF THE DRAWINGS

To enable the reader to realize one or more of the above-recited and other advantages and features of the present disclosure, a more particular description follows by reference to specific embodiments thereof which are illustrated in the appended drawings. Understanding that these drawings depict only typical embodiments of the disclosure and are not therefore to be considered limiting of its scope, the present disclosure will be described and explained with additional specificity and detail through the use of the accompanying drawings in which:
FIG. 1 is a simplified block diagram of one example of a cloud-based system to register and authenticate physical objects using digital fingerprints.
FIG. 2 is a simplified flow diagram of a process for customer setup in connection with a system of the type illustrated in Fig. 1.
FIG. 3 is a simplified flow diagram of a process to utilize a registration station in connection with a system of the type illustrated in Fig. 1.
FIG. 4 is a simplified flow diagram of a process to utilize an authentication station in connection with a system of the type illustrated in Fig. 1.

### DETAILED DESCRIPTION OF ONE OR MORE EMBODIMENTS

The technology disclosed herein addresses the two separate problems - tracking an object that may or may not have an attached serial number and ensuring that an item received at a manufacturing site or at a station within a facility, is the correct item. It does so with a single technology based on digital fingerprints of the items in the manufacturing or supply chain. The following paragraphs describe the two functionalities in more detail.

### Tracking

Barcodes and other proxies provide little security against counterfeiting but are useful for tracking items in environments where counterfeiting is not a concern. There are, however, many places where a barcode or other proxy is impossible or impractical. First, of course, if they are affixed to the item, they can detach, leaving the item unidentifiable. Second, if the part continually undergoes change in a manufacturing process, such proxies can be obscured or destroyed entirely. Third, many items such as bolts and small gears are too small for serial number or QR codes. And finally, some objects are meant to be attractive and most proxies are not items of beauty. In all of these situations, the current disclosure teaches a system that uses native features of the item to identity it as it is being tracked. Other patents of ours such as U.S. Pat. No. 10,346,852 "Preserving Authentication under Item Change" are useful in tracking objects that change during manufacturing or in the supply chain but are only peripheral to what is described here where the native features are used as part of a tracking system.

When **ID** proxies are impractical or get obscured during manufacturing, tracking becomes particularly difficult. At manufacturing sites that produce many different components this leads to similar but incorrect components being added to items, often with serious consequences. By using native features for identity determination or confirmation, installing similar but incorrect parts in a component or manufactured unit becomes much less likely.

A further consideration is worth stating: a barcode or other attached proxy is useful for tracking an object only if it is attached (uniquely) to one specific object. If the object or the barcode or both are counterfeit, whatever it is the system acts like it is tracking, it isn't tracking the correct object itself This interplay between tracking and counterfeit prevention is discussed more in the following section.

### Preventing Counterfeits

While barcodes and QR codes are useful for tracking items, their use in preventing counterfeiting is misapplied and of little utility. If an item can be counterfeited, any identification proxy can be counterfeited as well, often with considerably greater ease than the item itself. To discourage counterfeiters, complex features are often added to the item, to the ID proxy, or to both based on the idea that complex features are difficult for the counterfeiter to duplicate. In addition to making the items less attractive, this has led to an arms race between counterfeiters and manufacturers, an arms race that the counterfeiters are winning. What one person can make intentionally another can copy intentionally.

Because anticounterfeiting efforts have concentrated on the complexity problem, and because tracking is still necessary, manufacturers have had to do both - add needless complexity to their items (to prevent counterfeiting) and add ID proxies (for tracking). The result is ever- increasing expenses with little evidence they are effective at reducing counterfeiting. The technology described herein uses the natural complexity of the physical object - the result of characteristics of the materials, accidental variations due to manufacturing, or other causes - to identity the item at each location in a tracking process, whether within a manufacturing facility or within a broader supply chain. These natural or native features of the physical object are expressed in a digital fingerprint. We use terms like "natural" or "native" to reference features of the object itself as distinguished from artificial or added labels, tags, bar codes or other proxies.

### EXAMPLE IMPLEMENTATION

There are many different ways that the disclosed system can be implemented. What is discussed here is one possible embodiment of the taught system. This discussion is general, describing the various components of the system and how they work together to produce the unique benefits of the disclosed system, but it is presented solely to convey information on the taught system and not to limit it.

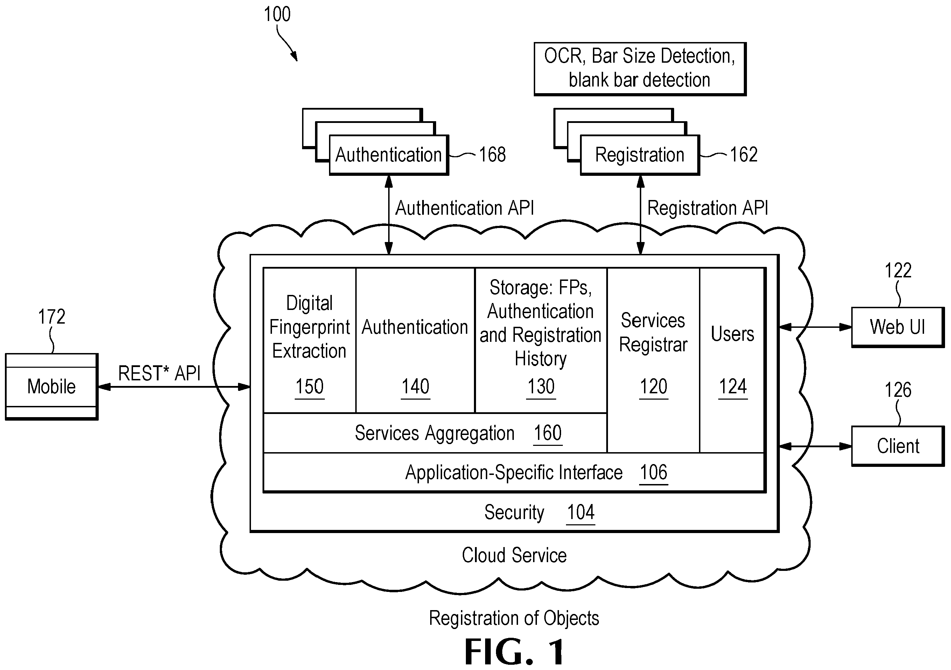

Referring now to Fig. 1, a simplified block diagram illustrates a system 100 and illustrative software architecture in accordance with one embodiment of the invention. Security layer 104 is arranged such that all connections go through the security layer and thence to their specific destinations. The Security layer 104 enforces access rules defined in the Services Registrar component 120 and Users layer 124 described below. This applies to both inbound and outbound communication.

For inbound communication, this affects who and what systems may communicate with the system 100. The access rules may be further customized per customer for specific business needs. A "customer" refers to an entity that is a user of the system 100, for example, a manufacturer. For example, with one customer, enhanced rules in the Application-Specific Interface (API) 106 may enforce the business requirement that particular accounts may perform authentications only for certain product classes. "Accounts" here refers to individual user accounts maintained in the Users layer 124. The users and third-party systems granted access to the System 100 are registered in the Users layer 124. Each user or third-party system has one or more roles so that the Security layer 104 may authorize each request separately.

For outbound communication, the Security layer 104 provides application layer security over and above security configured at the network and operations level. For example, the Security layer 104 may limit the flow of business events to a specific set of product classes when these events must be filtered for security or compliance purposes. Business events may be, for example, in the outbound case, who gets the report on what object. There is, for example, no need for the assembly line making transmissions of type "a" to get reports on components meant for type "b." Further, if the system is used in a multi-manufacturer supply chain, it is likely the entity controlling the chain would not want information related to components made by one manufacturer to be able to get information about other manufacturers. Further, if there are directives (as there often are with classified components, for example, that reports be issued in a particular format to a particular group of people and no others), then it is a matter of both security (because the parts are classified) and compliance (since there are those directives). These are merely examples of business events than can be controlled by the security layer.

### Services Registrar Component 120

The System 100 has an ever-growing set of digital fingerprints of registered objects. While all digital fingerprints are accessible in the Storage layer 130, a subset of the digital fingerprints are loaded into working memory (not shown) for faster authentication (see Authentication). The Services Registrar component 120 manages the working memory allocations. This component may be used to:
- Find the correct Authentication instance for an authentication request
- Find an unused Authentication instance to load a set of digital fingerprints
- Find the correct Authentication parameters for the Authentication instance

In a presently preferred embodiment, for one customer, each Authentication instance serves as a distinct working memory for a product class. Since all product classes are not required to be in working memory at all times, the Service Registrar component 120 rotates product classes into Authentication instances as needed. This reduces the number of Authentication instances required, which in turn saves on operational costs.

### Storage Layer 130: Digital Fingerprints and Event History

Traceability is key to object identification and authentication. The Storage layer 130 ensures that all digital fingerprints that have been entered into the System 100 are retained. They may be made inactive if they are not needed at a particular time, but they can be restored later. This is handled through an archival and versioning process.

In more detail, all processing events preferably are retained for auditing purposes. These events are linked to the digital fingerprints used for that event. The events may include:
- Image Extraction - extracting a digital fingerprint from an image
- digital fingerprint registration - storing and associating identification information of a real-world object
- digital fingerprint archival - deactivation of a digital fingerprint so that it is no longer currently associated with the identification of a real-world object
- digital fingerprint authentication - Find the known real-world object. Specifically, given a digital fingerprint extracted from an image in the field, find a matching digital fingerprint captured during registration.
- digital fingerprint loading and unloading - copying or removing, respectively, of a digital fingerprint from the working memory (see Services Registrar and Authentication) Authentication Service

The Authentication layer 140 serves as the working memory of digital fingerprints. This current set of digital fingerprints represents the set of real-world objects from which an incoming request seeks a match. In a preferred embodiment, an authentication instance may be implemented as a combination of both software and hardware. Its input is generally an image (from the item being authenticated) and operational instructions (what kind of part is this supposed to be, whose part is it, etc.). The hardware isn't strictly a part of the system but is used by the authentication instance. It may comprise the computer processor, working memory, the specific reference memory (on a disc but swapped into working memory when required), and related systems. The software converts the image to a digital fingerprint, fetches reference digital fingerprints, makes the comparisons, and generates and exports reports on the results of the comparisons. The authentication instance has allocated memory and processor time for its use. It has access to data but strictly speaking the authentication instance is the program that does the authentication. There may be many of them running concurrently (for example, as multiple threads on a processor).

### Digital Fingerprint Extraction Service

Cameras take pictures of real-world objects and the System 100 processes them as image or image data. These images may be converted into digital fingerprints onsite (where the images are captured) or in the System. For the latter case, this conversion takes place in the fingerprint extraction layer 150. The conversion of images to digital fingerprints makes use of a number of extraction parameters. These parameters vary between product classes. Each conversion, therefore, requires a set of extraction parameters. These may be tracked in the Services Registrar layer 120.

### Fingerprint Catalog

"Fingerprint Catalog" refers to a package of instructions to the system on how to carry out a particular set of digital fingerprint matches. (The moniker is not important.) Put another way, the Fingerprint Catalog specifies necessary information for a given class of objects. In general, the catalog includes information necessary to register and or authenticate the objects of the corresponding class. In a presently preferred embodiment, a Fingerprint Catalog may be stored in the Services Registrar layer 120 and it may contain some or all of the following parameters and settings:
**Extraction parameters.** Extraction parameters guide how a digital fingerprint is created. They include parameters informing image processing steps as well parameters informing feature extraction algorithms. Examples may include: imageScalingFactor, extractionMode.

**Authentication parameters.** Authentication parameters guide how a query digital fingerprint is matched to a reference set digital fingerprint. These parameters inform applicable or available digital fingerprint matching algorithms. Examples may include: scaleMin, scaleMax, allowedAnglelntervals

**User settings.** These are of course dependent on the particular user. They include such information as what data from the user (meta data, list of references, etc.) should be included in the records for the object, the format(s) to be used in reporting back to them, etc.

**Registration station settings.** In some embodiments, registration station settings may include API URL, image cropping settings, computer vision-based triggering settings.

**Fixed authentication settings.** These are fixed in the sense that they do not change from instance to instance or with changes to the category of objects. These settings may include API URL, image cropping settings, and computer vision-based triggering settings.

**Mobile device settings.** In some embodiments, these settings may include digital fingerprint catalog filter, and application preferences.

**Icons, logos, images, colors for UI.** Customers generally provide these for use in the mobile application. Some examples include app icon, landing page company logo, images for each product class, and skin colors for the entire app.

### Services Aggregation Service 160

The Storage 130, Digital Fingerprint Extraction 150, and Authentication 140 layers require substantial coordination. That may be provided by the Services Aggregation Service 160. Some examples may include:
- Finding the product class' Authentication instance from the Services Registrar, loading a product class of digital fingerprints from the Storage layer into the Authentication layer, and writing the Load events back into the Storage layer.
- Finding the product class' Authentication instance from the Services Registrar, calling the Authentication layer to find a match, and writing the event to the Storage layer.
- Extracting a digital fingerprint from an image. In some embodiments, this may be done in a digital fingerprint extraction process or daemon, illustrated as digital fingerprint extraction layer 150.
- Inserting the digital fingerprint and the corresponding event into the Storage layer 130, and loading the digital fingerprint into an Authentication instance.

### Application-Specific Interface 106

Any customer-specific logic preferably exists in the Application-Specific Interface 106. Furthermore, customer-specific storage requirements are also defined in this layer. For example, for one customer, real-world serial numbers must be associated to all digital fingerprints and events. For another customer, there is no serial number; only a match to a product class is required.

Transaction requirements in the System also vary between customers. As a result, these may be defined, for example, as rules in the Application-Specific Interface 106. Some examples of transaction rules may include:
- For product-class identification purposes, digital fingerprints for all real-world objects of that product-class must exist in Storage but duplicates are acceptable.
- When a digital fingerprint is written to Storage and loaded into the Authentication layer 140 in a single call to the System 100, neither the write nor the load is allowed if either fail. Put another way, a digital fingerprint is captured (from the object) and a set of reference digital fingerprints are loaded to working memory as part of running an authentication process. If either one of those processes fail, the other one is also aborted.

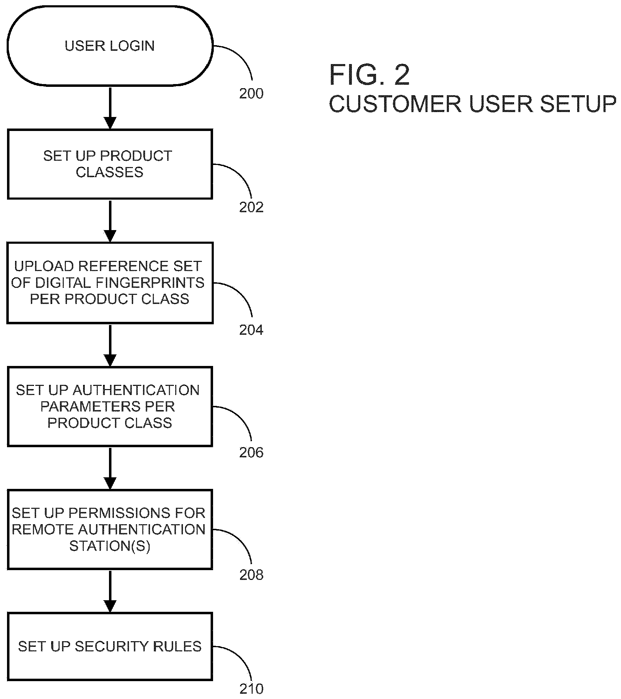

WebUI 122 represents a Customer-specific web portal for select people to look at the history and state of the Cloud Service. It also allows appropriate Users the ability to generate reports and manage reference sets (see Fig. 2).

### Client 126

This interface represents interaction with a Customer's software system via their exposed front-end. This allows for real-time propagation of Event data from the described cloud service to the Customer's software system for immediate action based on their own business logic.

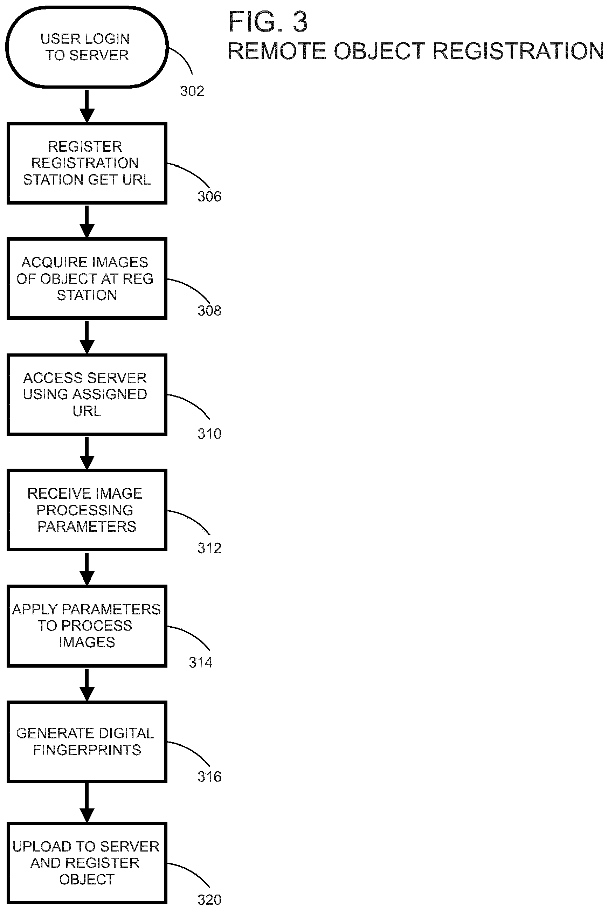

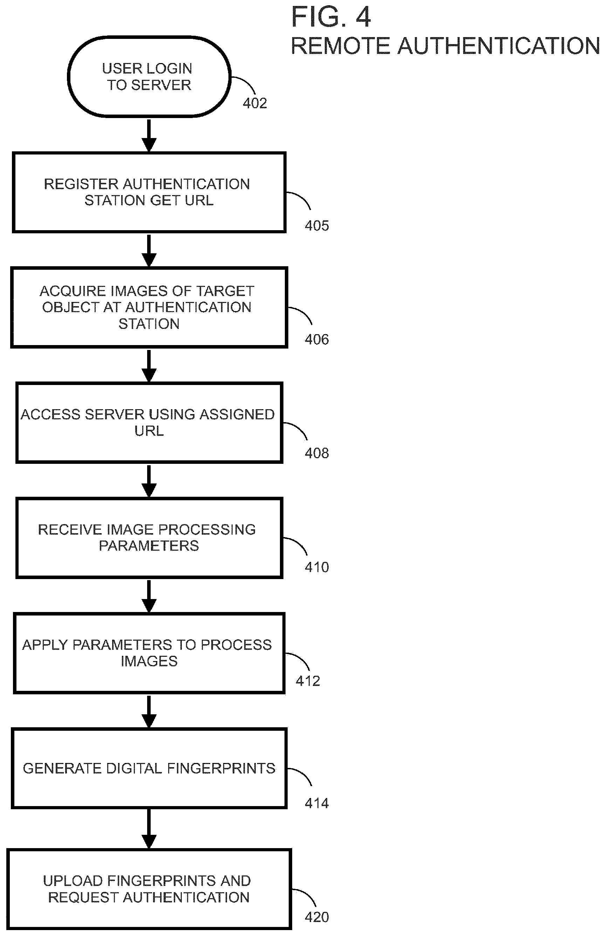

Connected Devices: Several devices may connect to this system, the most important being for registering objects and later authenticating them. All connections go through the security layer 104. To illustrate, an external registration station 162, component, or device may utilize a registration API to register a physical object into the system 100. See description below of Fig. 3. An external authentication station 168, component, or device may utilize an authentication API to authenticate a physical object by acquiring or submitting image data of the physical object for digital fingerprint extraction. See description below of Fig. 4.

In one implementation, a registration station 162 may comprise a fixed rig including lighting and camera(s). Each Registration station 162 has a unique identifier and accesses the cloud system via a customer or use case specific URF. The Registration station 162 may receive processing parameters from the cloud system via the same API. The Registration station 162 captures images of physical objects. It may have its own digital fingerprint extraction service or rely on the one in the cloud system (e.g., the fingerprint extraction layer 150). Images and (if created locally) digital fingerprints for authentication are uploaded to the cloud system via the API.

### Authentication

In some embodiments, a fixed rig includes lighting and camera(s). Each authentication station 168 preferably has a unique identifier and accesses the present system 100 via a customer or use case specific URL. The Authentication station 168 receives processing parameters from the Alitheon cloud via the same API. The Authentication station 168 captures images of objects. It may have its own digital fingerprint extraction service or rely on the one in the cloud (e.g., the fingerprint extraction layer 150 shown in Fig. 1). Images and (if created locally) digital fingerprints for authentication are uploaded to the cloud via the

### API.

Mobile units 172 may be used for registration and or for authentication in connection with a system of the type described herein. The system may be used for any of the combinations of mobile/fixed registration and mobile/fixed authentication. In one example, the mobile unit 172 may comprise a smart phone with a camera, for example, an Apple iPhone^{®}. The mobile unit 172 may include external lighting and/or lenses. In some embodiments, the mobile unit 172 may not include creation of digital fingerprints, which may instead be created by the fingerprint extraction service 150 using inputs from a fixed registration rig described below. In general, the mobile unit 172 may create the digital fingerprints either at registration or at authentication. The mobile unit 172, in one embodiment, may utilize a REST API. *REST* is an acronym for REpresentational State Transfer - a software architectural style that defines a set of constraints to be used for creating Web services. See https://en.wikipedia.org/wiki/Representational_state_transfer for more detail.

An authorized User of a mobile app must login for the app to function. Based on the User, the mobile app is provided a customer or use case specific URL via a cloud API. In a preferred embodiment, the mobile app receives digital fingerprint catalog data via the specific URL based on User. Images captured by the app preferably are sent to the cloud system using the same URL

Example Optics for fixed Registration and Authentication Stations:
- Consists of a color camera sensor + lens constructed to fit up to 1kg gold bar in the field of view at specified working distance.
- Has a 60-70 deg Lambertian LED source placed within a close proximity to the lens.
- Has a diffuse large area LED source placed in plane with camera lens and facing the object (i.e. away from the camera). A small hole exists in led source for camera aperture to see through.
- Background is a neutral color with a Hue and Saturation level that is significantly different than pure gold. The system detects something of the color of gold to know a bar is within the field of view.

Fig. 2 is a simplified flow diagram of one example process for customer setup in connection with a system of the type illustrated in Fig. 1. To begin, a user logs into the system, block 200. The user may set up classes of products (or physical objects), block 202. The user may upload a reference set of digital fingerprints for each product class, block 204. Authentication may be conducted at the class level - "yes, this is a valid (or recognized) member-object of this class." Or, authentication may be conducted at the individual object level. In some applications, classification may be used to narrow or select a dataset of digital fingerprints for authentication. At block 206, the user may set up specific parameters per product class for induction, authentication, reporting, etc. Such parameters may include feature templates (see below) and or technical parameters for matching feature vectors (number or percentage of vectors, Euclidean distance, etc.). At block 208, the user may set up permission for remote authentication stations. Authorized stations may be identified by assigned URL, IP address or other means. Security may include other forms such as VPN or 2FA. In some cases, a remote station may be required to submit digital fingerprints of a physical token to gain access. At block 210, security rules may determine not only what remote stations are authorized to use the system, but what they are authorized to do, and what information they may receive. In one example, they may receive solely a binary yes/no reply to an authentication request. In another example, they may receive detailed metadata (for example, provenance information) about the object submitted for authentication.

Fig. 3 is a simplified flow diagram of a process to utilize a remote registration station in connection with a system of the type illustrated in Fig. 1. A registration station may comprise a computer or processor with suitable software and network communication capability. Various known and commercially available equipment can be used or adapted to this purpose (see hardware discussion below). The remote registration station may include a camera or other sensors to capture image data of a physical object (see imaging discussion below). The camera and or sensors may be integrated, for example, in a wearable device or smartphone. In other cases, the station may be connectable to external devices for image capture.

In Fig. 3, a user may login to a central server, block 302. The user may register a remote registration station, typically in association with a customer or client of the system. Software on the server may assign and return a unique URL for that station to subsequently engage with the server system, block 306. At the remote registration station, it may acquire images of an object, again directly or indirectly, block 308. Next the station accesses the central server, preferably using the assigned URL, block 310. In some cases, the registration system processes the image data locally. To that end, it may receive previously-defined image processing parameters, block 312. The registration station may then apply those parameters to process the acquired image data, block 314, and to generate digital fingerprints from the image data, block 316. Finally, the digital fingerprints may be uploaded to the server in connection with registering the physical object from which the image data was captured. Various related metadata may also be uploaded for storage in a database of the central server in association with the digital fingerprints as discussed above. Using remote registration systems, digital fingerprint data of various physical objects can be added to the central system securely from essentially any location that has digital communication capability. The remote location may be associated with manufacture, warehousing, distribution, sales, hypothecation, or other activities related to the corresponding physical objects.

Fig. 4 is a simplified flow diagram of a process to utilize an authentication station in connection with a system of the type illustrated in Fig. 1. In some embodiments, a registration station may also serve as an authentication station. Essentially the same hardware and software used to acquire images and digitally fingerprint an object for registration may be utilized to capture and process images of an unknown or uncertain object (aka a "target object") for the purpose of authentication or identification. In the figure, a user logs into the server, block 402. The user may register an authentication station into the server, and the server returns a unique URL to be used for subsequent access by that authentication station, block 405. The authentication station may acquire images of a target object, block 406. See the above description of a registration system. The authentication station then accesses the central server using the assigned URL, block 408. The authentication station may receive (download) image processing parameters from the server, block 410. The station then applies the parameters to process the image data, block 412, and generate digital fingerprints, block 414. The digital fingerprints are then uploaded to the server with a request for authentication, block 420. Authentication at the server is described above with regard to Fig. 1.

### Digital Fingerprinting

"Digital fingerprinting" refers to the creation and use of digital records (digital fingerprints) derived from properties of a physical object, which digital records are typically stored in a database. Digital fingerprints maybe used to reliably and unambiguously identify or authenticate corresponding physical objects, track them through supply chains, record their provenance and changes over time, and for many other uses and applications.

Digital fingerprints store information, preferably in the form of numbers or "feature vectors," that describes features that appear at particular locations, called points of interest, of a two-dimensional (2-D) or three-dimensional (3-D) object. In the case of a 2-D object, the points of interest are preferably on a surface of the corresponding object; in the 3-D case, the points of interest may be on the surface or in the interior of the object. In some applications, an object "feature template" may be used to define locations or regions of interest for a class of objects. The digital fingerprints may be derived or generated from digital data of the object which may be, for example, image data.

While the data from which digital fingerprints are derived is often images, a digital fingerprint may contain digital representations of any data derived from or associated with the object. For example, digital fingerprint data may be derived from an audio file. That audio file in turn may be associated or linked in a database to an object. Thus, in general, a digital fingerprint may be derived from a first object directly, or it may be derived from a different object (or file) linked to the first object, or a combination of the two (or more) sources. In the audio example, the audio file may be a recording of a person speaking a particular phrase. The digital fingerprint of the audio recording may be stored as part of a digital fingerprint of the person speaking. The digital fingerprint (of the person) may be used as part of a system and method to later identify or authenticate that person, based on their speaking the same phrase, in combination with other sources.

Returning to the 2-D and 3-D object examples mentioned above, feature extraction or feature detection may be used to characterize points of interest. In an embodiment, this may be done in various ways. Two examples include Scale-Invariant Feature Transform (or SIFT) and Speeded Up Robust features (or SURF). Both are described in the literature. For example: "Feature detection and matching are used in image registration, object tracking, object retrieval etc. There are number of approaches used to detect and matching of features as SIFT (Scale Invariant Feature Transform), SURF (Speeded up Robust Feature), FAST, ORB etc. SIFT and SURF are most useful approaches to detect and matching of features because of it is invariant to scale, rotate, translation, illumination, and blur." MISTRY, Darshana et al., Comparison of Feature Detection and Matching Approaches: SIFT and SURF, GRD Journals- Global Research and Development Journal for Engineering | Volume 2| Issue 4| March 2017.

In an embodiment, features may be used to represent information derived from a digital image in a machine-readable and useful way. Features may be point, line, edges, and blob of an image etc. There are areas such as image registration, object tracking, and object retrieval etc. that require a system or processor to detect and match correct features. Therefore, it may be desirable to find features in ways that are invariant to rotation, scale, translation, illumination, noisy and blur images. The search of points of interest from one object image to corresponding images can be very challenging work. The search may preferably be done such that same physical interest points can be found in different views. Once located, points of interest and their respective characteristics may be aggregated to form the digital fingerprint (generally including 2-D or 3-D location parameters).

In an embodiment, features may be matched, for example, based on finding a minimum threshold distance. Distances can be found using Euclidean distance, Manhattan distance etc. If distances of two points are less than a prescribed minimum threshold distance, those key points may be known as matching pairs. Matching a digital fingerprint may comprise assessing a number of matching pairs, their locations or distance and other characteristics. Many points may be assessed to calculate a likelihood of a match, since, generally, a perfect match will not be found. In some applications a "feature template" may be used to define locations or regions of interest for a class of objects.

### Scanning or Image Capture

In this application, the term "scan" is used in the broadest sense, referring to any and all means for capturing an image or set of images, which may be in digital form or transformed into digital form. Images may, for example, be two dimensional, three dimensional, or in the form of a video. Thus a "scan" may refer to an image (or digital data that defines an image) captured by a scanner, a camera, a specially adapted sensor or sensor array (such as a CCD array), a microscope, a smartphone camera, a video camera, an x-ray machine, a sonar, an ultrasound machine, a microphone (or other instruments for converting sound waves into electrical energy variations), etc. Broadly, any device that can sense and capture either electromagnetic radiation or mechanical wave that has traveled through an object or reflected off an object or any other means to capture surface or internal structure of an object is a candidate to create a "scan" of an object. Various means to extract "fingerprints" or features from an object may be used; for example, through sound, physical structure, chemical composition, or many others. The remainder of this application will use terms like "image" but when doing so, the broader uses of this technology should be implied. In other words, alternative means to extract "fingerprints" or features from an object should be considered equivalents within the scope of this disclosure. Similarly, terms such as "scanner" and "scanning equipment" herein may be used in a broad sense to refer to any equipment capable of carrying out "scans" as defined above, or to equipment that carries out "scans" as defined above as part of their function.

More information about digital fingerprinting can be found in various patents and publications assigned to Alitheon, Inc. including, for example, the following: DIGITAL FINGERPRINTING, U.S. Pat. No. 8,6109,762; OBJECT IDENTIFICATION AND INVENTORY MANAGEMENT, U.S. Pat. No. 9,152,862; DIGITAL FINGERPRINTING OBJECT AUTHENTICATION AND ANTI-COUNTERFEITING SYSTEM, U.S. Pat. No. 9,443,298; PERSONAL HISTORY IN TRACK AND TRACE SYSTEM, U.S. Pat. No. 10,037,537; PRESERVING AUTENTICATION UNDER ITEM CHANGE, U.S. Pat. App. Pub. No. 2017-0243230 Al. These references are incorporated herein by this reference.

The foregoing description, for purpose of explanation, has been described with reference to specific embodiments. However, the illustrative discussions above are not intended to be exhaustive or to limit the disclosure to the precise forms disclosed. Many modifications and variations are possible in view of the above teachings. The embodiments were chosen and described in order to best explain the principles of the disclosure and its practical applications, to thereby enable others skilled in the art to best utilize the disclosure and various embodiments with various modifications as are suited to the particular use contemplated.

The system and method disclosed herein may be implemented via one or more components, systems, servers, appliances, other subcomponents, or distributed between such elements. When implemented as a system, such systems may include an/or involve, inter alia, components such as software modules, general-purpose CPU, RAM, etc. found in general-purpose computers. In implementations where the innovations reside on a server, such a server may include or involve components such as CPU, RAM, etc., such as those found in general- purpose computers.

Additionally, the system and method herein may be achieved via implementations with disparate or entirely different software, hardware and/or firmware components, beyond that set forth above. With regard to such other components (e.g., software, processing components, etc.) and/or computer-readable media associated with or embodying the present inventions, for example, aspects of the innovations herein may be implemented consistent with numerous general purpose or special purpose computing systems or configurations. Various exemplary computing systems, environments, and/or configurations that may be suitable for use with the innovations herein may include, but are not limited to: software or other components within or embodied on personal computers, servers or server computing devices such as routing/connectivity components, hand-held or laptop devices, multiprocessor systems, microprocessor-based systems, set top boxes, consumer electronic devices, network PCs, other existing computer platforms, distributed computing environments that include one or more of the above systems or devices, etc.

In some instances, aspects of the system and method may be achieved via or performed by logic and/or logic instructions including program modules, executed in association with such components or circuitry, for example. In general, program modules may include routines, programs, objects, components, data structures, etc. that perform particular tasks or implement particular instructions herein. The inventions may also be practiced in the context of distributed software, computer, or circuit settings where circuitry is connected via communication buses, circuitry or links. In distributed settings, control/instructions may occur from both local and remote computer storage media including memory storage devices.

The software, circuitry and components herein may also include and/or utilize one or more type of computer readable media. Computer readable media can be any available media that is resident on, associable with, or can be accessed by such circuits and/or computing components. By way of example, and not limitation, computer readable media may comprise computer storage media and communication media. Computer storage media includes volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical storage, magnetic tape, magnetic disk storage or other magnetic storage devices, or any other medium which can be used to store the desired information and can accessed by computing component. Communication media may comprise computer readable instructions, data structures, program modules and/or other components. Further, communication media may include wired media such as a wired network or direct-wired connection, however no media of any such type herein includes transitory media. Combinations of the any of the above are also included within the scope of computer readable media.

In the present description, the terms component, module, device, etc. may refer to any type of logical or functional software elements, circuits, blocks and/or processes that may be implemented in a variety of ways. For example, the functions of various circuits and/or blocks can be combined with one another into any other number of modules. Each module may even be implemented as a software program stored on a tangible memory (e.g., random access memory, read only memory, CD-ROM memory, hard disk drive, etc.) to be read by a central processing unit to implement the functions of the innovations herein. Or, the modules can comprise programming instructions transmitted to a general-purpose computer or to processing/graphics hardware via a transmission carrier wave. Also, the modules can be implemented as hardware logic circuitry implementing the functions encompassed by the innovations herein. Finally, the modules can be implemented using special purpose instructions (SIMD instructions), field programmable logic arrays or any mix thereof which provides the desired level performance and cost.

As disclosed herein, features consistent with the disclosure may be implemented via computer-hardware, software and/or firmware. For example, the systems and methods disclosed herein may be embodied in various forms including, for example, a data processor, such as a computer that also includes a database, digital electronic circuitry, firmware, software, or in combinations of them. Further, while some of the disclosed implementations describe specific hardware components, systems and methods consistent with the innovations herein may be implemented with any combination of hardware, software and/or firmware. Moreover, the above-noted features and other aspects and principles of the innovations herein may be implemented in various environments. Such environments and related applications may be specially constructed for performing the various routines, processes and/or operations according to the invention or they may include a general-purpose computer or computing platform selectively activated or reconfigured by code to provide the necessary functionality. The processes disclosed herein are not inherently related to any particular computer, network, architecture, environment, or other apparatus, and may be implemented by a suitable combination of hardware, software, and/or firmware. For example, various general-purpose machines may be used with programs written in accordance with teachings of the invention, or it may be more convenient to construct a specialized apparatus or system to perform the required methods and techniques.

Aspects of the method and system described herein, such as the logic, may also be implemented as functionality programmed into any of a variety of circuitry, including programmable logic devices ("PLDs"), such as field programmable gate arrays ("FPGAs"), programmable array logic ("PAL") devices, electrically programmable logic and memory devices and standard cell-based devices, as well as application specific integrated circuits. Some other possibilities for implementing aspects include memory devices, microcontrollers with memory (such as EEPROM), embedded microprocessors, firmware, software, etc. Furthermore, aspects may be embodied in microprocessors having software-based circuit emulation, discrete logic (sequential and combinatorial), custom devices, fuzzy (neural) logic, quantum devices, and hybrids of any of the above device types. The underlying device technologies may be provided in a variety of component types, e.g., metal-oxide semiconductor field-effect transistor ("MOSFET") technologies like complementary metal-oxide semiconductor ("CMOS"), bipolar technologies like emitter-coupled logic ("ECL"), polymer technologies (e.g., silicon-conjugated polymer and metal-conjugated polymer-metal structures), mixed analog and digital, and so on.

It should also be noted that the various logic and/or functions disclosed herein may be enabled using any number of combinations of hardware, firmware, and/or as data and/or instructions embodied in various machine-readable or computer-readable media, in terms of their behavioral, register transfer, logic component, and/or other characteristics. Computer-readable media in which such formatted data and/or instructions may be embodied include, but are not limited to, non-volatile storage media in various forms (e.g., optical, magnetic or semiconductor storage media) though again does not include transitory media. Unless the context clearly requires otherwise, throughout the description, the words "comprise," "comprising," and the like are to be construed in an inclusive sense as opposed to an exclusive or exhaustive sense; that is to say, in a sense of "including, but not limited to." Words using the singular or plural number also include the plural or singular number respectively. Additionally, the words "herein," "hereunder," "above," "below," and words of similar import refer to this application as a whole and not to any particular portions of this application. When the word "or" is used in reference to a list of two or more items, that word covers all of the following interpretations of the word: any of the items in the list, all of the items in the list and any combination of the items in the list.

Although certain presently preferred implementations of the invention have been specifically described herein, it will be apparent to those skilled in the art to which the invention pertains that variations and modifications of the various implementations shown and described herein may be made without departing from the spirit and scope of the invention. Accordingly, it is intended that the invention be limited only to the extent required by the applicable rules of law

While the foregoing has been with reference to a particular embodiment of the disclosure, it will be appreciated by those skilled in the art that changes in this embodiment may be made without departing from the principles and spirit of the disclosure, the scope of which is defined by the appended claims.

### EXAMPLE EMBODIMENTS

Further examples of embodiments of the present invention are defined, without limitation, by the following Enumerated Example Embodiments (EEEs):
EEE 1. A system comprising:
   a digital computing server arranged for communications over a network and implementing:
   a storage layer to store digital fingerprint records and processing event records, each processing event record linked to the stored digital fingerprint records used in the corresponding event;
   an authentication layer to provide working memory of digital fingerprints;
   a users layer to maintain user accounts, where each user and third-party system granted access to the system has a corresponding user account in the users layer;
   a services registrar component to manage working memory allocations, including allocating a portion of the working memory as an authentication instance for one client for a selected product class; wherein the services registrar is configured to load digital fingerprint records of a selected product class from the storage layer into the authentication instance;
   a digital fingerprint extraction layer; and
   a security layer to enforce rules governing network level access to the system, where the access rules are stored in the users layer, on a per user basis, and or stored in the services registrar component.
EEE 2. The system of EEE 1 and further comprising a services aggregation service executable on the server and arranged to communicate with and coordinate operations among the storage layer, the digital Fingerprint extraction layer, and the authentication layer.
EEE 3. The system of EEE 1 wherein the processing events stored in the storage layer include at least one of the following event types:
   an extraction of a digital fingerprint from an image;
   a registration of a digital fingerprint that includes storing and associating identification information of a physical object;
   an archival of a digital fingerprint that includes deactivation of a digital fingerprint so that it is no longer currently associated with the identification of a physical object;
   an authentication of a digital fingerprint that includes finding a matching digital fingerprint captured during registration; and
   a load or an unload of a digital fingerprint that includes copying or removing, respectively, of a digital fingerprint from the working memory.
EEE 4. The system of EEE 1 wherein the security layer, for outbound communication, provides application layer security over and above security configured at the network and operations level.
EEE 5. The system of EEE 4 wherein the security layer is configured to limit the flow of business events to a specific set of product classes.
EEE 6. The system of EEE 1 and further comprising:
   a registration API coupled to the security layer for communication with an external registration station to register a physical object into the system;
   wherein the registration station comprises a fixed rig including lighting and camera(s) to capture images of a physical object for extracting digital fingerprints.
EEE 7. The system of EEE 1 and further comprising a registration station including an imaging device arranged to capture an image of a physical object; and the registration station capable of data communication over the network to the server.
EEE 8. The system of EEE 7 wherein the server provisions a URL for exclusive use by the registration station.
EEE 9. The system of EEE 1 and further comprising a customer-specific web portal;
   the web portal arranged for select users to access the history and state of the system; and
   the web portal also arranged to permit authorized users to generate reports and manage reference sets of digital fingerprints subject to applicable access rules are stored in the users layer.
EEE 10. The system of EEE 2 wherein the services aggregation service is arranged to carry out the steps of:
   receiving an authentication request wherein the authentication request specifies a product class;
   identifying an authentication instance for the specified product class from the services registrar;
   loading a product class of digital fingerprints from the storage layer into the identified authentication instances in the authentication layer; and
   and writing the loading events back into the storage layer.
EEE 11. The system of EEE 2 wherein the services aggregation service is arranged to carry out the steps of:
   receiving an authentication request, wherein the authentication request specifies a product class;
   identifying an authentication instance for the specified product class from the services registrar;
   calling the authentication layer to find a matching digital fingerprint record; and writing the event to the storage layer.
EEE 12. The system of EEE 1 and further comprising:
   an authentication API coupled to the security layer for communication with an external authentication station;
   wherein the authentication API enables transmitting an authentication request to the system from an external authentication station and receiving an authentication result from the system.
EEE 13. The system of EEE 1 and further comprising:
   a REST API coupled to the security layer for communication with an external mobile unit to provide authentication services to the mobile unit; and
   a mobile app executable on the mobile unit is provided a customer or use case specific URL for said communication using the REST API.
EEE 14. The system of EEE 1 and further comprising a fingerprint catalog stored in the memory, the fingerprint catalog storing data to enable and manage registration of physical objects into the system, and authentication of a target object based on image data or digital fingerprints of the target object.
EEE 15. The system of EEE 14 wherein the fingerprint catalog stored data includes: extraction parameters, authentication parameters, and user settings.
EEE 16. The system of EEE 14 wherein the fingerprint catalog stored data includes: registration station settings and fixed authentication settings.
EEE 17. The system of EEE 14 wherein the fingerprint catalog stored data includes mobile device settings.
EEE 18. A cloud-based computing system configured with instructions that, when executed, cause the system to:
   receive and store in memory a catalog comprising configuration settings and parameters for a user entity;
   communicate over a network with a remote station to register the remote station into the system in association with the user entity;
   provision a URL for the registered station to interact with the system;
   transmit the URL to the registered station;
   receive at the URL a request message from the registered station, the request message including image data of a physical object;
   process the image data according to the stored catalog parameters to form a digital fingerprint of the physical object; and
   store the digital fingerprint in the system in association with the user entity, thereby inducting the physical object into the system.
EEE 19. The computing system according to EEE 18 wherein the instruction, when executed, further cause the system to:
   receive and store in memory a set of reference digital fingerprints associated with the user entity;
   receive at the URL an authentication request message from the registered station, the request message including image data of a physical object;
   process the image data according to the stored catalog parameters to form a digital fingerprint of the physical object;
   compare the digital fingerprint to the stored set of reference digital fingerprints to find a match; and
   generate a report of the comparison.
EEE 20. The computing system according to EEE 18 wherein the instruction, when executed, further cause the system to:
   receive and store in memory a set of reference digital fingerprints associated with the user entity;
   receive at the URL an authentication request message from the registered station, the request message including a target digital fingerprint of a target physical object;
   compare the target digital fingerprint to the stored set of reference digital fingerprints to find a match; and
   generate a report of the comparison.

## Claims

1. A cloud-based method of registering physical objects for authentication, the method implemented on a computing system, and the method comprising:
receiving and storing in memory a catalog comprising configuration settings and parameters for a user entity;
communicating over a network with a remote station to register the remote station into the computing system in association with the user entity;
provisioning a URL for the registered station to interact with the computing system;
transmitting the URL to the registered station;
receiving at the URL a request message from the registered station, the request message including image data of a physical object;
processing the image data according to the stored catalog parameters to form a digital fingerprint of the physical object; and
storing the digital fingerprint in the system in association with the user entity, thereby inducting the physical object into the system.

2. The method according to claim 1, further comprising:
receiving and storing in memory a set of reference digital fingerprints associated with the user entity;
receiving at the URL an authentication request message from the registered station, the request message including image data of a physical object;
processing the image data according to the stored catalog parameters to form a digital fingerprint of the physical object;
comparing the digital fingerprint to the stored set of reference digital fingerprints to find a match; and
generating a report of the comparison.

3. The method according to claim 1, further comprising:
receiving and storing in memory a set of reference digital fingerprints associated with the user entity;
receiving at the URL an authentication request message from the registered station, the request message including a target digital fingerprint of a target physical object;
comparing the target digital fingerprint to the stored set of reference digital fingerprints to find a match; and
generating a report of the comparison.

4. A computing system implementing a cloud-based method of registering physical objects for authentication, the system comprising:
a digital computing server arranged for communications over a network and implementing:
a storage layer to store digital fingerprint records and processing event records, each processing event record linked to the stored digital fingerprint records used in the corresponding event;
an authentication layer to provide working memory of digital fingerprints;
a users layer to maintain user accounts, where each user and third-party system granted access to the system has a corresponding user account in the users layer;
a services registrar component to manage working memory allocations, including allocating a portion of the working memory as an authentication instance for one client for a selected product class; wherein the services registrar is configured to load digital fingerprint records of a selected product class from the storage layer into the authentication instance;
a digital fingerprint extraction layer; and
a security layer to enforce rules governing network level access to the system, where the access rules are stored in the users layer, on a per user basis, and or stored in the services registrar component;
wherein the computing system is configured to perform the method of any one of claims 1-3.

5. The system of claim 4 and further comprising a services aggregation service executable on the server and arranged to communicate with and coordinate operations among the storage layer, the digital fingerprint extraction layer, and the authentication layer.

6. The system of claim 5 wherein the services aggregation service is arranged to carry out the steps of:
receiving an authentication request wherein the authentication request specifies a product class;
identifying an authentication instance for the specified product class from the services registrar;
loading a product class of digital fingerprints from the storage layer into the identified authentication instances in the authentication layer; and
and writing the loading events back into the storage layer.

7. The system of claim 5 wherein the services aggregation service is arranged to carry out the steps of:
receiving an authentication request, wherein the authentication request specifies a product class;
identifying an authentication instance for the specified product class from the services registrar;
calling the authentication layer to find a matching digital fingerprint record; and writing the event to the storage layer.

8. The system of any one of claims 4-7 wherein the processing events stored in the storage layer include at least one of the following event types:
an extraction of a digital fingerprint from an image;
a registration of a digital fingerprint that includes storing and associating identification information of a physical object;
an archival of a digital fingerprint that includes deactivation of a digital fingerprint so that it is no longer currently associated with the identification of a physical object;
an authentication of a digital fingerprint that includes finding a matching digital fingerprint captured during registration; and
a load or an unload of a digital fingerprint that includes copying or removing, respectively, of a digital fingerprint from the working memory.

9. The system of any of claims 4-8 wherein the security layer, for outbound communication, provides application layer security over and above security configured at the network and operations level; and wherein the security layer is configured to limit the flow of business events to a specific set of product classes.

10. The system of any one of claims 4-9 and further comprising:
a registration API coupled to the security layer for communication with an external registration station to register a physical object into the system;
wherein the registration station comprises a fixed rig including lighting and camera(s) to capture images of a physical object for extracting digital fingerprints.

11. The system of any one of claims 4-10 and further comprising a registration station including an imaging device arranged to capture an image of a physical object; the registration station capable of data communication over the network to the server; and wherein the server provisions a URL for exclusive use by the registration station.

12. The system of any one of claims 4-11 and further comprising a customer-specific web portal;
the web portal arranged for select users to access the history and state of the system; and
the web portal also arranged to permit authorized users to generate reports and manage reference sets of digital fingerprints subject to applicable access rules are stored in the users layer.

13. The system of any one of claims 4-12 and further comprising:
an authentication API coupled to the security layer for communication with an external authentication station;
wherein the authentication API enables transmitting an authentication request to the system from an external authentication station and receiving an authentication result from the system.

14. The system of any one of claims 4-13 and further comprising:
a REST API coupled to the security layer for communication with an external mobile unit to provide authentication services to the mobile unit; and
a mobile app executable on the mobile unit is provided a customer or use case specific URL for said communication using the REST API.

15. The system of any one of claims 4-14 and further comprising a fingerprint catalog stored in the memory, the fingerprint catalog storing data to enable and manage registration of physical objects into the system, and authentication of a target object based on image data or digital fingerprints of the target object, wherein the fingerprint catalog stored data includes at least one of extraction parameters, authentication parameters, user settings, registration station settings, fixed authentication settings, and mobile device settings.
